(19) Europäisches Patentamt
European Patent Office
Office européen des brevets

(11) EP 4 629 637 A1

(12) EUROPEAN PATENT APPLICATION

(43) Date of publication:
08.10.2025 Bulletin 2025/41

(21) Application number: 24305507.6

(22) Date of filing: 02.04.2024

(51) International Patent Classification (IPC):
H04N 19/82 (2014.01)    H04N 19/117 (2014.01)
H04N 19/176 (2014.01)   H04N 19/70 (2014.01)
H04N 19/96 (2014.01)

(52) Cooperative Patent Classification (CPC):
H04N 19/82; H04N 19/117; H04N 19/176;
H04N 19/70; H04N 19/96

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• URBAN, Fabrice
  35235 THORIGNE-FOUILLARD (FR)
• BOISSON, Guillaume
  35137 PLEUMELEUC (FR)
• BORDES, Philippe
  35890 LAILLE (FR)
• LEFEBVRE, Frederic
  35000 RENNES (FR)

(74) Representative: Interdigital
Immeuble ZEN 2
845 A, avenue des Champs Blancs
35510 Cesson-Sévigné (FR)

(54) ALF WITH PARTITIONING

(57) A method and an apparatus for encoding or decoding a video are provided wherein at least one first block is obtained from a splitting of a second block of an image of a video, the second block being obtained from a partitionning of the image for decoding the image. At the first block level, at least one syntax element is encoded or decoded that provides for indicating a filter set index selecting an adaptive loop filter set among a plurality of adaptive loop filter sets for the at least one first block, and the at least one first block is filtered using the selected adaptive loop filter set.

FIG. 11

EP 4 629 637 A1

**Description**

TECHNICAL FIELD

The present embodiments generally relate to video compression. The present embodiments relate to a method and an apparatus for encoding or decoding an image or a video. More particularly, the present embodiments relate to adaptive loop filter in video compression system.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

SUMMARY

According to an aspect, a method for encoding a video is provided. The method comprises obtaining at least one first block from a splitting of a second block of an image of a video, the second block being obtained from a partitionning of the image for encoding the image, filtering the at least one first block using an adaptive loop filter set selected among a plurality of adaptive loop filter sets, encoding, for the at least one first block, at least one syntax element providing for indicating a filter set index selecting the adaptive loop filter set among the plurality of adaptive loop filter sets.

According to another aspect, an apparatus for encoding a video is provided. The apparatus comprises one or more processors operable to obtain at least one first block from a splitting of a second block of an image of a video, the second block being obtained from a partitionning of the image for encoding the image, filter the at least one first block using an adaptive loop filter set selected among a plurality of adaptive loop filter sets, encode, for the at least one first block, at least one syntax element providing for indicating a filter set index selecting the adaptive loop filter set among the plurality of adaptive loop filter sets.

According to an aspect, a method for decoding a video is provided. The method comprises obtaining at least one first block from a splitting of a second block of an image of a video, the second block being obtained from a partitionning of the image for decoding the image, decoding, at the first block level, at least one syntax element providing for indicating a filter set index selecting an adaptive loop filter set among a plurality of adaptive loop filter sets for the at least one first block, filtering the at least one first block using the selected adaptive loop filter set.

According to another aspect, an apparatus for decoding a video is provided. The apparatus comprises one or more processors operable to obtain at least one first block from a splitting of a second block of an image of a video, the second block being obtained from a partitionning of the image for decoding the image, decode, at the first block level, at least one syntax element providing for indicating a filter set index selecting an adaptive loop filter set among a plurality of adaptive loop filter sets for the at least one first block, filter the at least one first block using the selected adaptive loop filter set.

Further embodiments that can be used alone or in combination are described herein.

One or more embodiments also provide a computer program comprising instructions which when executed by one or more processors cause the one or more processors to perform any one of the methods for encoding or decoding a video according to any of the embodiments described herein. One or more of the present embodiments also provide a non-transitory computer readable medium and/or a computer readable storage medium having stored thereon instructions for encoding or decoding a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

According to an aspect, a device is provided that comprises an apparatus for decoding a video according to any one of the embodiments described above; and at least one of (i) an antenna configured to receive or transmit a signal, the signal including data representative of the video, (ii) a band limiter configured to limit the signal to a band of frequencies that includes the data representative of the video, or (iii) a display configured to display the video.

In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG. 4 illustrates an example of loop filters in VVC.

FIG. 5 illustrates an example of additional loop filters implemented in ECM.

FIG. 6 shows an example of a Luma ALF 7x7 diamond-shape filter (left) and Chroma ALF 5x5 diamond-shape filter (right).

FIG. 7 shows an example of a Luma ALF signaled filter shape in ECM-10.

FIG. 8 shows an example of multi-type tree splitting modes.

FIG. 9 illustrates an example of a method for encoding a video according to an embodiment.

FIG. 10 illustrates an example of a method for decoding a video according to an embodiment.

FIG. 11 illustrates an example of a method for signaling ALF syntax at block level according to an embodiment.

FIG. 12 illustrates an example of a method for signaling ALF syntax at block level according to another embodiment.

FIG. 13 shows two remote devices communicating over a communication network in accordance with an example of the present principles.

FIG. 14 shows the syntax of a signal in accordance with an example of the present principles.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

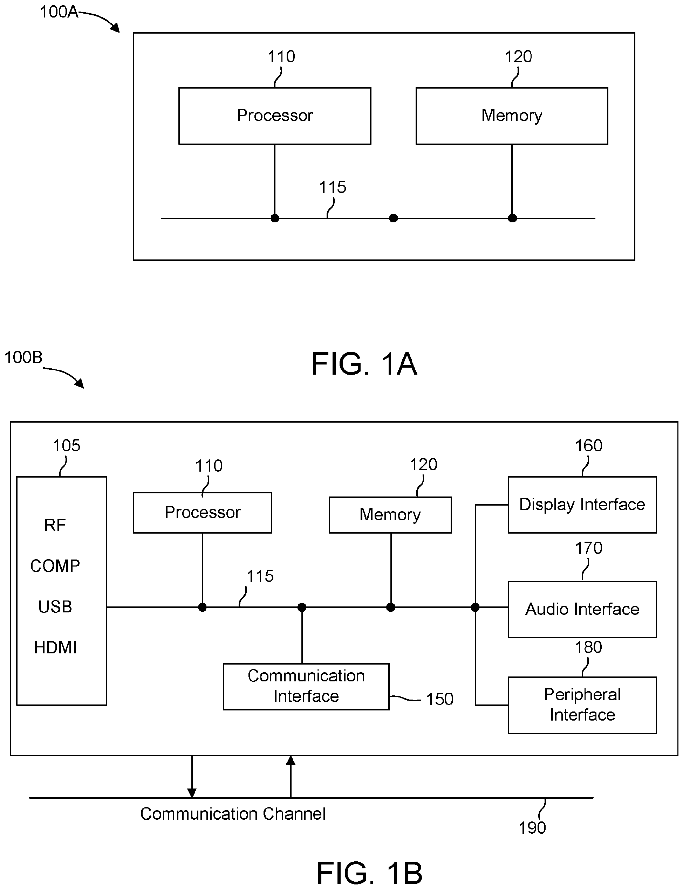

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

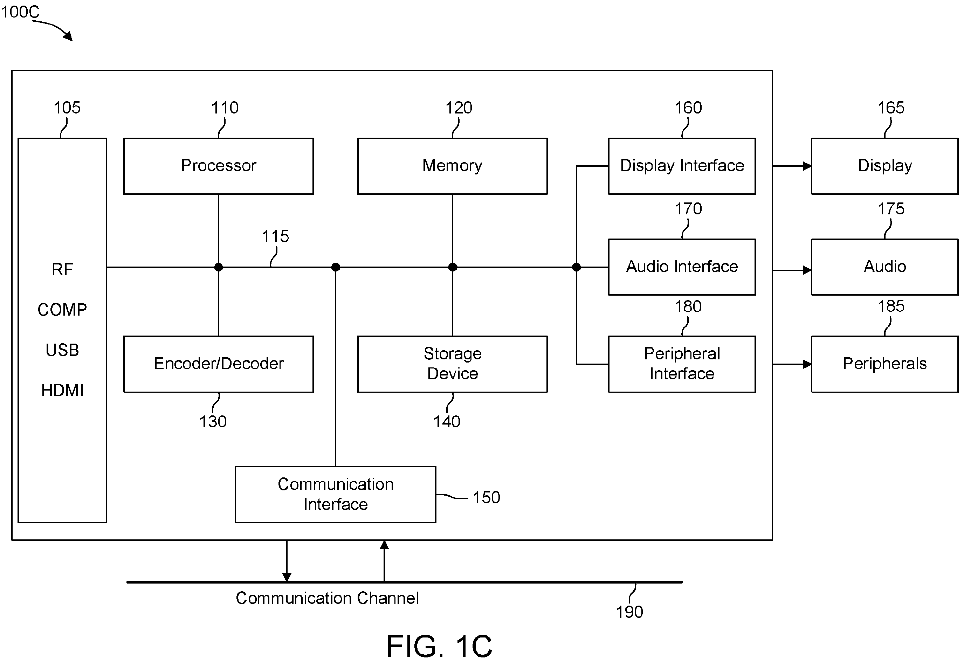

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentionned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-

decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the sytem 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

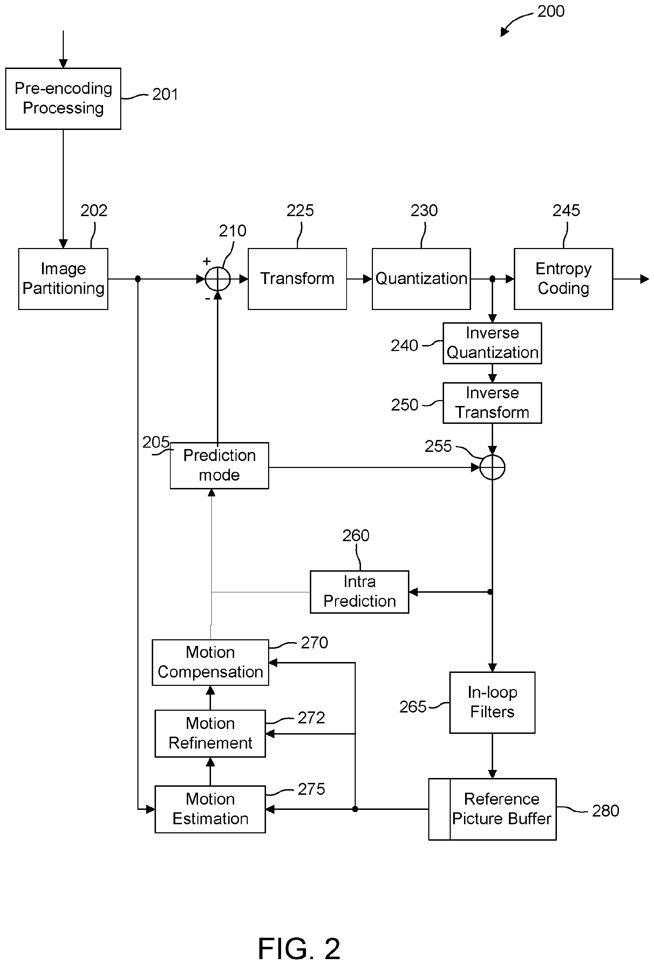

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (*Versatile Video Coding, Standard ITU-T H.266, ISO/IEC 23090-3, 2020)* or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the endoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

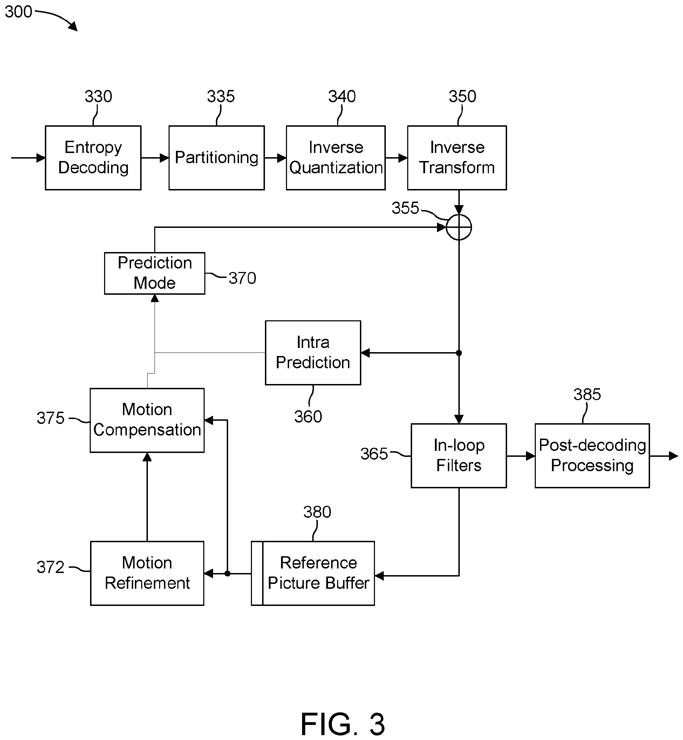

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: upscaling). The post-decoding processing can use metadata derived in the pre-encoding processing and signaled in the bitstream.

Some of the embodiments described herein relates to in-loop filtering.

Any one of the embodiments described herein can be implemented for instance in the in-loop filters module and signaling module of a video encoder and in-loop filters module and syntax decoding of a video decoder. For instance, the embodiments described herein can be implemented in the in-loop filters module 265 and/or entropy coding module 245 of the video encoder 200 in FIG. 2 or the in-loop filters module 365 and/or entropy decoding module 330 of the video decoder 300 in FIG. 3.

Block-based intra/inter prediction and transform coding, together with residues quantization, induce a variety of artifacts at medium and low bitrates. In order to reduce those artifacts, video coding standards, such as VVC, and state-of-the-art video coding solutions, such as ECM, implement in-loop filters, such as deblocking filtering (DBF), Bilateral filtering (BIF), Sample-adaptive offset (SAO) and Adaptive loop filtering (ALF).

Deblocking filter (DBF) aims at smoothing discontinuities that may appear along block boundaries. Sample-adaptive offset (SAO) is designed to attenuate artifacts occurring around edges and correct the local average intensity changes (e.g. banding artifacts) with offsets signaled in the bitstream. Bilateral filter (BIF) aims at denoising further reconstructed pictures from artifacts induced from quantization in the Transform domain. Adaptive loop filters (ALF) are determined at encoder side as optimal filters according to a rate-distortion criterion. ALF filters are transmitted along with the bitstream, then retrieved and used at decoder side.

The VVC standard implements three kinds of in-loop filters: deblocking filter (DBF), Sample-adaptive offset (SAO), and Adaptive loop filter (ALF). The deblocking filter aims at reducing blocking discontinuities. Sample-adaptive offset mostly aims at reducing artifacts resulting from the quantization of transform coefficients. Adaptive loop filter and Cross-component adaptive loop filter are adaptive filters enabling to enhance the reconstructed signal, using for instance Wiener-filter encoding approaches.

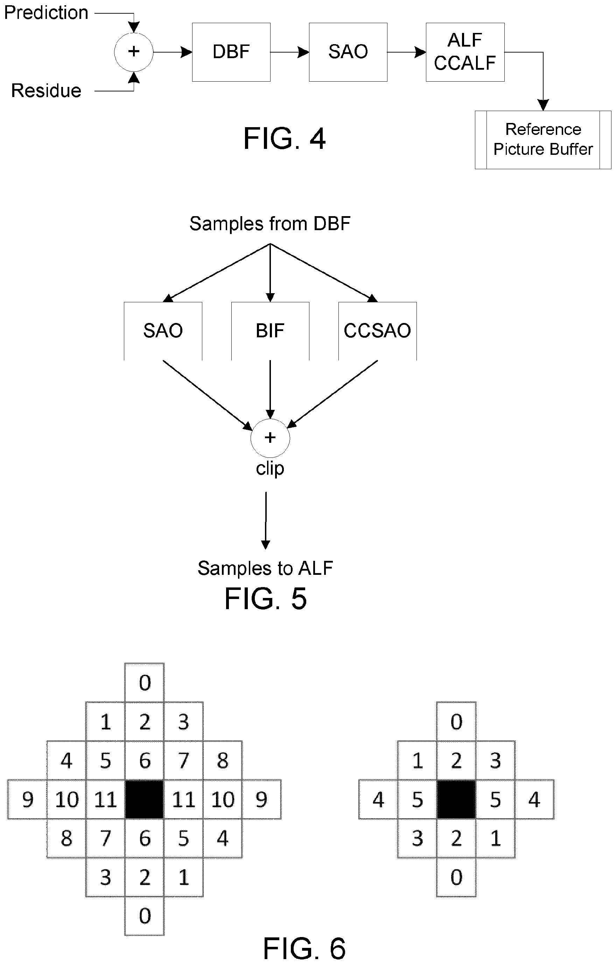

The workflow of VVC in-loop filters is depicted in FIG. 4. More details can be found in *JVET-T2002, Algorithm description for Versatile Video Coding and Test Model 11 (VTM 11),* section §3.7. If local deblocking conditions are met, Luma and Chroma reconstructed samples located along block boundaries are first filtered with deblocking filters (DBF). Then offsets are added locally depending on a classification based on band-classifier or edge-classifier with Sample-adaptive offset (SAO). Eventually, Adaptive-loop filters (ALF) and its variant Cross-component Adaptive loop filters (CCALF) are run before storing the resulting sample values in the Reference Picture buffer.

Further loop filters were introduced in Enhanced Compression Model (ECM) software: Bilateral filtering (BIF) and Cross-component Sample adaptive offset (CCSAO). Both are carried out in the same loop-filter stage as SAO, and, like SAO, use samples from deblocking as input, as shown in FIG. 5.

BIF offset is computed based on a 5x5 diamond, using coefficients to be fetched in precomputed look-up table, depending on QP and on the difference between the values of the neighbor sample and of the sample to be filtered. BIF is processed independently and in a similar way on Luma and on Chroma components.

CCSAO is used to refine reconstructed samples. Similarly to SAO, CCSAO classifies the reconstructed samples into different categories, derives one offset for each category and adds the offset to the reconstructed samples in that category. Whereas SAO uses a single component of current sample as input, CCSAO utilizes all three components to classify the current sample into different color bands.

SAO, BIF and CCSAO offsets are computed in parallel, added to the reconstructed samples and jointly clipped, before proceeding to ALF, as shown FIG. 5.

ALF is an adaptive filter that is applied to reduce the MSE between the original and the reconstructed samples, using for instance Wiener-filter encoding approaches.

ALF filters coefficients can be transmitted in the bitstream and decoded at decoder side, before being applied on reconstructed samples. Pre-trained ALF filters coefficients can also be hard-coded both at encoder and decoder sides.

In VVC, ALF filters are point-symmetrical, DC-neutral with integer coefficients. ALF in VVC uses 7x7 diamond-shaped filters for Luma and 5x5 diamond-shaped filters Chroma, as depicted in FIG. 6.

Filtering operations can be implemented as follows.

Let $R(x,y)$ be a reconstructed sample and let $\overline{R}(x,y)$ denote its ALF-filtered value. In the linear implementation of ALF, $\overline{R}(x,y)$ is computed as:

$$\bar{R}(x,y) = R(x,y) + \left[\sum_{i=0}^{N-2} c_i \times (\Delta R_i^+ + \Delta R_i^-)\right] \qquad (1)$$

Where $(c_i)_{0 \le i < N-1}$ denote the filter coefficients,
And:

$$\Delta R_i^+ = R(x + x_i, y + y_i) - R(x,y)$$
$$\Delta R_i^- = R(x - x_i, y - y_i) - R(x,y) \qquad (2)$$

With $(\pm x_i, \pm y_i)$ denoting the coordinates offset corresponding to the reconstructed samples associated with the i-th coefficient $c_i$.

In the non-linear implementation of ALF, Equation (1) becomes:

$$\bar{R}(x,y) = R(x,y) + \left[\sum_{i=0}^{N-2} c_i \times (f_i^+ + f_i^-)\right] \qquad (3)$$

With:

$$f_i^+ = \min\big(b_i, \max(-b_i, R(x + x_i, y + y_i) - R(x,y))\big)$$
$$f_i^- = \min\big(b_i, \max(-b_i, R(x - x_i, y - y_i) - R(x,y))\big) \qquad (4)$$

Where $b_i$ is the clipping parameter associated with the coefficient $c_i$, that is determined by a clipping index $d_i$. The clipping parameter $b_i$ is derived as follows:

$$b_i = \begin{cases} 2^{BD} & \text{when } d_i = 0 \\ 2^{BD-1-2d_i} & \text{otherwise} \end{cases} \qquad (5)$$

Where $BD$ denotes the sample bit depth, and $d_i$ can be 0, 1, 2 or 3.

Integer arithmetic can be used for ALF filtering. Let NUM_BITS denote the number of bits used to represent ALF filter coefficients $c_i$ as signed integers. ALF fitering operations are implemented as follows:

$$\bar{R}(x,y) = R(x,y) + \left[\left(\left[\sum_{i=0}^{N-2} c_i \times (f_i^+ + f_i^-)\right] + \text{offset}\right) \gg \text{shift}\right] \qquad (6)$$

Where

$$\text{shift} = \text{NUM\_BITS} - 1 \qquad (7)$$

And

$$\text{offset} = 1 \gg (\text{shift} - 1) \qquad (8)$$

Online filter optimization and offline pre-training can be implemented at the encoder side. ALF filter coefficients and clipping indices are determined at encoder side, for instance by solving Wiener-Hopf equations to minimize the MSE (Mean Squared Error) between reconstructed samples and their original values. If a rate-distortion condition is met, these coefficients and, if applicable, the corresponding clipping indices, are encoded in an Adaptation Parameter Set (APS). In VVC, an ALF APS may contain one Luma filter set and up to 8 Chroma filters.

VVC also allows the use of pre-trained (pre-defined) Luma filters that are hard-coded both at encoder and decoder side.

ALF for Luma presents a further local adaptation with a classification based on local gradients. ALF for Luma therefore relies on filter sets, that is a plurality of filters that comes together with a mapping list, each class of the classification being associated with a specific filter of the filter set. Depending on the classification, geometric filter transformations are applied, such as 90-degree rotation, diagonal or vertical flip, so that the same filter coefficients may apply to different classes depending on the local directionality.

A number of pre-trained Luma filter sets are available at encoder and decoder side. The encoder chooses according to a rate-distortion criterion whether it shall transmit the Luma filter set that has been optimized for the current slice/frame.

At CTU level, the encoder decides if ALF is performed, and selects the Luma filter set that shall be used between the pre-trained filter sets and the filter sets that have already been transmitted.

In VVC, Chroma ALF does not implement local classification, but uses instead region-adapted filters. Up to 8 ALF Chroma filters are available at the same time at encoder and decoder sides, and each Chroma CTB (Coded Tree Block) signals which filter it uses.

ALF in Enhanced Compression Model (ECM) software presents further developments which can be found in *JVET-AF2025, Algorithm description of Enhanced Compression Model 11 (ECM 11),* section §3.4, some of which are described below.

Fixed ALF filters are introduced for Luma. This intermediate filtering step is introduced for Luma, and consists in filtering reconstructed samples with pre-trained filters, called "fixed filters", before proceeding with the online-trained adaptive filters. In ECM-10, there are three fixed filters, two of them being classification-based. Let them be denoted $f_0$ and $f_1$.

Classification-based fixed filters are designed as follows. Two Laplacian-based classifiers (one for each classification-based fixed filter) are applied to a 2x2 block. In each classifier, activity and directionality values are derived based on vertical, horizontal, and diagonal gradients using a window surrounding each 2x2 block. For each 2x2 block, the mean value of a surrounding window is calculated. Then, for each sample of this window, the difference between the sample value and the mean value is calculated. A scaling factor is determined based on the activity value derived from a Laplacian classifier. The square root of the sum of the squared differences is further quantized to $C'$ by a scaling factor. The value of $C'$ is an integer between 0 and 7, inclusively. Let $C_i$ denote the class index provided by the 896-class Laplacian classifier of i-th fixed filter, based on the activity and directionality values. The final class index $C_i'$ is derived as:

$$C_i' = C' \times 896 + C_i \qquad (9)$$

Two double diamond-shaped fixed filters are selected from the two fixed filter sets by using the derived two class indices $C_0'$ and $C_1'$. The first fixed filter $f_0$ is applied to sample values before DBF and ALF input, with an 13x13 diamond applying on ALF input and an additional 9x9 diamond applying to sample values before DBF. The second fixed filter $f_1$ is applied to output of $f_0$ and sample values before DBF, using a 9x9 diamond on each.

A third Luma fixed filter with a shape of diamond 7x7 is used, without classification. This fixed filter is referred to as the Gaussian fixed filter.

After fixed filtering, a signaled Luma filter is applied to the ALF input samples, samples before the deblocking filter (DBF), outputs of the two classifications-based fixed filters, output of the Gaussian fixed filter and the residual data.

The value of a final Luma filtered sample is computed as follows:

$$\tilde{R}(x,y) = R(x,y) + \left[\sum_{i=0}^{19} c_i(f_i^+ + f_i^-)\right] + \left[\sum_{i=20}^{25} c_i(g_{0,i}^+ + g_{0,i}^-)\right]$$

$$+ \left[\sum_{i=26}^{27} c_i(h_i^+ + h_i^-)\right] + \left[\sum_{i=28}^{33} c_i(g_{2,i}^+ + g_{2,i}^-)\right] + \left[\sum_{i=34}^{34} c_i g_{0,i}\right]$$

$$+ \left[\sum_{i=35}^{35} c_i g_{1,i}\right] + \left[\sum_{i=36}^{36} c_i h_i\right] + \left[\sum_{i=37}^{37} c_i r_i\right] + \left[\sum_{i=38}^{38} c_i rFiltered_i\right]$$

$$+ \left[\sum_{i=39}^{39} c_i g_{2,i}\right]$$

(10)

where $f_i^{\pm}$ is the clipped difference between a neighboring sample and the current sample $R(x, y)$, $g_{0,i}^{\pm}$ is the clipped difference between an intermediate sample generated from the first fixed filter and the current sample $R(x, y)$, $g_{2,i}^{\pm}$ is the clipped difference between an intermediate sample generated from the third fixed filter and the current sample $R(x, y)$, $g_{0,34}$ is the clipped difference between the collocated intermediate sample generated from first fixed filter and the current sample $R(x, y)$, $g_{1,35}$ is the clipped difference between the collocated intermediate sample generated from second fixed filter and the current sample $R(x, y)$, $g_{2,39}$ is the clipped difference between the collocated intermediate sample generated from third fixed filter and the current sample $R(x, y)$, $h_i^{\pm}$ is the clipped difference between a neighboring sample before DBF and the current sample $R(x, y)$, $h_{36}$ is the clipped difference between the collocated sample before DBF and the current sample $R(x, y)$, and where $r_{37}$ is the clipped neighboring residual sample value and $rFiltered_{38}$ is the clipped residual sample filtered by a fixed-filter. For residual samples, the fixed filter used is a fixed filter from the first fixed filter set.

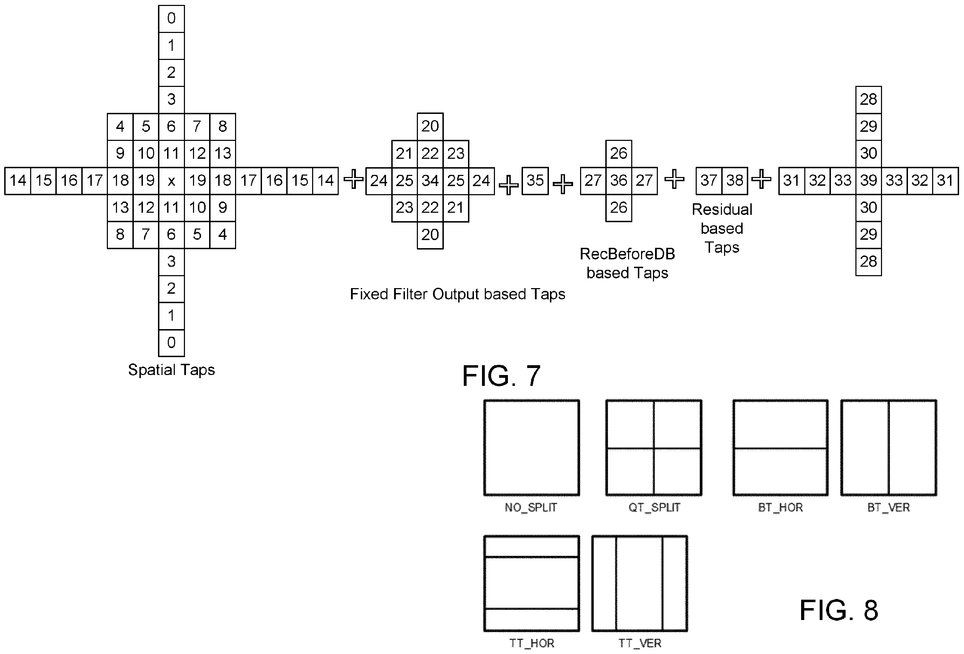

The complete filter shape of ALF using residual samples as additional inputs is shown in FIG. 7.

Luma classification is extended with an additional alternative classifier. For a signaled Luma filter set, a flag is signaled to indicate whether the alternative classifier is applied. Geometrical transformation is not applied to the alternative (11) band classifier. When the band-based classifier is applied, the sum of sample values of a 2x2 luma block is calculated at first. Then the class index is calculated as follows: class_index = (sum * 25) >> (sample bit depth + 2)

While filter set parameters (clipping values, coefficient values) are signaled in an APS, the APS IDs to use for a given picture is signaled in the Picture Header or the Slice Header (several APS can be used for a given picture), and the index of the filter set to use is signaled per CTU (Coding Tree Unit) in the Slice data, for example as described in the table below for VVC. In the case of ECM, an additional index (in addition to filter_idx (e.g. alf_luma_prev_filter_idx) can be signaled to select among alternative filters in the given APS.

Table 1: Coding tree unit syntax in VVC

| coding_tree_unit( ) { |
| --- |
|     xCtb = CtbAddrX << CtbLog2SizeY |
|     yCtb = CtbAddrY << CtbLog2SizeY |
|     if( sh_sao_luna_used_flag ‖ sh_sao_chroma_used_flag) |
|       sao( CtbAddrX, CtbAddrY) |
|     if( sh_alf_enabled_flag ){ |
|       **atf_ctb_flag**[ 0 ][ CtbAddrX ][ CtbAddrY ] |
|       if( alf_ctb_flag[ 0 ][ CtbAddrX ][ CtbAddrY] ) { |
|         if( sh_num_alf_aps_ids_luma > 0 ) |
|         **alf_use_aps_flag** |
|         if( alf_use_aps_flag ) { |

(continued)

| |
|---|
| if( sh_num_alf_aps_ids_luma > 1 ) |
|    **alf_luma_prev_filter_idx** |
|  } else |
|    **alf_luma_fixed_filter_idx** |
|  } |
| if( sh_alf_cb_enabled_flag ) { |
|  **atf_ctb_flag**[ 1 ][ CtbAddrX ][ CtbAddrY ] |
|  if( alf_ctb_flag[ 1 ][ CtbAddrX ][ CtbAddrY ]    && alf_chroma_num_alt_filters_minus1 > 0 ) |
|   **alf_ctb_filter_alt_idx**[ 0 ][ CtbAddrX ][ CtbAddrY ] |
|  } |
|  if( sh_alf_cr_enabled_flag ) { |
|   **atf_ctb_flag**[ 2 ][ CtbAddrX ][ CtbAddrY ] |
|   if( alf_ctb_flag[ 2 ][ CtbAddrX ][ CtbAddrY ]    && alf_chroma_num_alt_filters_minus1 > 0 ) |
|    **alf_ctb_filter_alt_idx**[ 1 ][ CtbAddrX ][ CtbAddrY ] |
|   } |
|  } |
| if( sh_alf_cc_cb_enabled_flag ) |
|  **alf_ctb_cc_cb_idc**[ CtbAddrX ][ CtbAddrY ] |
| if( sh_alf_cc_cr_enabled_flag ) |
|  **alf_ctb_cc_cr_idc**[ CtbAddrX ][ CtbAddrY ] |
| ... |

The semantics of the VVC signaling is detailed below:

**alf_ctb_flag**[ cIdx ][ xCtb >> CtbLog2SizeY ][ yCtb >> CtbLog2SizeY ] equal to 1 specifies that the adaptive loop filter is applied to the coding tree block of the colour component indicated by cIdx of the coding tree unit at luma location ( xCtb, yCtb ). alf_ctb_flag[ cIdx ][ xCtb >> CtbLog2SizeY ][ yCtb >> CtbLog2SizeY ] equal to 0 specifies that the adaptive loop filter is not applied to the coding tree block of the colour component indicated by cIdx of the coding tree unit at luma location (xCtb, yCtb ).

When alf_ctb_flag[ cIdx ][ xCtb >> CtbLog2SizeY ][ yCtb >> CtbLog2SizeY ] is not present, it is inferred to be equal to 0.

**alf_use_aps_flag** equal to 0 specifies that one of the fixed filter sets is applied to the luma CTB. alf_use_aps_flag equal to 1 specifies that a filter set from an APS is applied to the luma CTB. When alf_use_aps_flag is not present, it is inferred to be equal to 0.

**alf_luma_prev_filter_idx** specifies the previous filter that is applied to the luma CTB. The value of alf_ luma_prev_filter _idx shall be in a range of 0 to sh_num_alf_aps_ids_luma - 1, inclusive. When alf_ luma_prev_filter _idx is not present, it is inferred to be equal to 0.

The variable AlfCtbFiltSetIdxY[ xCtb >> CtbLog2SizeY ][ yCtb >> CtbLog2SizeY ] specifying the filter set index for the luma CTB at location ( xCtb, yCtb ) is derived as follows:

- If alf_use_aps_flag is equal to 0, AlfCtbFiltSetIdxY[ xCtb >> CtbLog2SizeY ][ yCtb >> CtbLog2SizeY ] is set equal to alf_luma_fixed_filter_idx.

- Otherwise, AlfCtbFiltSetIdxY[ xCtb >> CtbLog2SizeY ][ yCtb >> CtbLog2SizeY ] is set equal to 16 + alf_luma_prev_filter_idx.

**alf_luma_fixed_filter_idx** specifies the fixed filter that is applied to the luma CTB. The value of alf_luma_fixed_filter_idx shall be in a range of 0 to 15, inclusive.

**alf_ctb_filter_alt_idx**[ chromaIdx ][ xCtb >> CtbLog2SizeY ][ yCtb >> CtbLog2SizeY ] specifies the index of the alternative chroma filter applied to the coding tree block of the chroma component, with chromaIdx equal to 0 for Cb and chromaIdx equal 1 for Cr, of the coding tree unit at luma location (xCtb, yCtb ). When alf_ctb_filter_alt_idx[ chromaIdx ] [ xCtb >> CtbLog2SizeY ][ yCtb >> CtbLog2SizeY ] is not present, it is inferred to be equal to zero.

**alf_ctb_cc_cb_idc**[ xCtb >> CtbLog2SizeY ][ yCtb >> CtbLog2SizeY ] equal to 0 specifies that the cross-component filter is not applied to the coding tree block of the Cb colour component at luma location ( xCtb, yCtb ). When alf_ctb_cc_cb_idc[ xCtb >> CtbLog2SizeY ][ yCtb >> CtbLog2SizeY ] is not equal to 0, alf_ctb_cc_cb_idc[ xCtb >> CtbLog2SizeY ][ yCtb >> CtbLog2SizeY ] - 1 specifies the filter set index of the cross-component filter applied to the coding tree block of the Cb colour component at luma location ( xCtb, yCtb ).

When alf_ctb_cc_cb_idc[ xCtb >> CtbLog2SizeY ][ yCtb >> CtbLog2SizeY ] is not present, it is inferred to be equal to 0.

**alf_ctb_cc_cr_idc**[ xCtb >> CtbLog2SizeY ][ yCtb >> CtbLog2SizeY ] equal to 0 specifies that the cross-component filter is not applied to the coding tree block of the Cr colour component at luma location ( xCtb, yCtb ). When alf_ctb_cc_cr_idc[ xCtb >> CtbLog2SizeY ][ yCtb >> CtbLog2SizeY ] is not equal to 0, alf_ctb_cc_cr_idc[ xCtb >> CtbLog2SizeY ][ yCtb >> CtbLog2SizeY ] - 1 specifies the filter set index of the cross-component filter applied to the coding tree block of the Cr colour component at luma location ( xCtb, yCtb ).

When alf_ctb_cc_cr_idc[ xCtb >> CtbLog2SizeY ][ yCtb >> CtbLog2SizeY ] is not present, it is inferred to be equal to 0.

In the early development stages of VVC, ALF was proposed with CU-level control. In *JVET-L0391 CE2.3 and CE2.4: Fixed filters, temporal filters, CU-level control and low-latency encoder for ALF, Nan Hu, Hilmi Enes Egilmez, Vadim Seregin, Akshay Gadde, Marta Karczewicz, 12th Meeting: Macao, CN, 3 12 Oct. 2018,* for each CTU, a control depth *(ALF_control_depth )* is signaled, followed by some flags indicating for each ALF control Unit, whether ALF is enabled or not. An ALF control Unit is a block, where the CTU is split following the picture partitioning, but stopping at min of (*ALF_control_depth, QTDepth*), wherein *QTDepth* is the maximum allowed depth for Quad Tree splitting of the CTU. According to the method, the ALF control granularity cannot be finer than *ALF_control_depth* or *QTDepth.*

Block partitioning for encoding an image in VVC is implemented as follows. In HEVC, a CTU (Coding Tree Unit) is a block that can be split into subblocks or CUs (Coding Units) for coding the CTU by using a quaternary-tree structure denoted as coding tree to adapt to various local characteristics. The decision whether to code a picture area using inter-picture (temporal) or intra-picture (spatial) prediction is made at the leaf CU level. Each leaf CU can be further split into one, two or four PUs according to the PU splitting type. Inside one PU, the same prediction process is applied, and the relevant information is transmitted to the decoder on a PU basis. After obtaining the residual block by applying the prediction process based on the PU splitting type, a leaf CU can be partitioned into transform units (TUs) according to another quaternary-tree structure similar to the coding tree for the CU. One of key feature of the HEVC structure is that it has the multiple partition conceptions including CU, PU, and TU.

In VVC, a quadtree with nested multi-type tree using binary and ternary splits segmentation structure replaces the concepts of multiple partition unit types, i.e. it removes the separation of the CU, PU and TU concepts except as needed for CUs that have a size too large for the maximum transform length, and supports more flexibility for CU partition shapes. In the coding tree structure, a CU can have either a square or rectangular shape. A coding tree unit (CTU) is first partitioned by a quaternary tree (a.k.a. quadtree) structure. Then the quaternary tree leaf nodes can be further partitioned by a multi-type tree structure. As shown in FIG. 8, there are four splitting types in multi-type tree structure, vertical binary splitting (BT_VER), horizontal binary splitting (BT_HOR), vertical ternary splitting (TT_VER), and horizontal ternary splitting (TT_HOR). The multi-type tree leaf nodes are called coding units (CUs), and unless the CU is too large for the maximum transform length, this segmentation is used for prediction and transform processing without any further partitioning. This means that, in most cases, the CU, PU and TU have the same block size in the quadtree with nested multi-type tree coding block structure. The exception occurs when maximum supported transform length is smaller than the width or height of the colour component of the CU.

As described above, in VVC and ECM, ALF filter sets are selected on a per-CTU basis. With this granularity, especially when the CTU is large for example 256x256 pixels, content may not be homogeneous for a filter set, which leads to a loss of performance of the ALF filter.

Some embodiments provide for a method enabling selection of ALF filter set more locally than the CTU. For example, this can be done by signaling an indication of an index with a partitioning of the CTU designed for ALF. Such a partitionning of the CTU provides a plurality of ALF blocks inside the CTU. In the present document, the terms "ALF block" is used to refer to a block of a CTU which is obtained from a partitioning of the CTU for the signaling of the ALF control.

Embodiments are described herein in the context of adaptive loop filtering control signaling. However, the embodiments and variants provided herein can apply in a similar manner to any loop filter requiring control signaling at a finer level than a CTU.

In some embodiments, ALF partitioning uses the coding tree used for coding the CTU until a certain point.

In some embodiments, the ALF control signaling can have per ALF block syntax for indicating which filter set is used for the ALF block.

In other embodiments, the ALF control signaling can have CTU-based syntax (e.g. per CTU ALF filter set indexes are signaled) and per ALF block syntax for indicating which filter set is used for the ALF block.

Some embodiments provide for using a merge mode for signaling a filter set index used for an ALF block. In some variants, a flag is signaled for indicating whether a filter set index is signaled in a merge mode or in a raw mode.

Currently, in ECM ALF data is provided with different signaling: fixed filters are hard-coded and are not signaled; for other ALF filter, filter coefficients are signaled in the APS (at picture level, and APS are persistent and can be used for multiple pictures until it is overwritten or reset); ALF control is signaled per CTU in the coding tree syntax. ALF control comprises a flag that enables ALF for a given CTU, and if ALF is enabled for the given CTU, ALF control comprises at the CTU level indexes to signal which filter set to use among fixed filters, signaled filters and alternative filters.

Embodiments described herein provides for modifying ALF control data signaling to improve the granularity at which ALF is controlled.

Some embodiments provide for designing a partitioning for the ALF, that is obtaining block, called ALF blocks in the following, from a splitting/partitionning of the CTU. In this way, granularity of ALF signaling can then be defined at the ALF block level and ALF filter set can be selected at the ALF block level. Thus, ALF filtering is adapted at the ALF block level.

In ECM, granularity is currently at the CTU level. In existing solutions, an ALF switch has been proposed at a finer granularity (called CU-level). ALF switch provides for enabling or disabling ALF at the CU-level. However, ALF filter set used for a CTU cannot change among the CUs of the CTU.

Embodiments described herein provide for reducing the ALF control granularity down to an "ALF block", and controlling one or more ALF parameters such as a switch and a filter index. Some variants for designing the ALF partitioning are provided below. Any one of these variants can then be used for signaling ALF parameters at the ALF block.

In an embodiment, coding tree (CU) is used for designing the ALF partitionning of the CTU. In other words, the ALF paritionning is obtained from the partitioning of the CTU into CUs that is used for encoding or decoding the CTU.

In this embodiment, ALF parameters are added in the CU syntax; the ALF control granularity is thus the same as other coding tools signaled at the CU level.

When the Luma and Chroma coding tree are separated (CTU dual tree defining one coding tree for Luma and one coding tree for Chroma), the ALF control partitioning tree is also separated for Luma and Chroma. The ALF signaling is moved to the CU data.

In a variant, for ALF partitioning, Luma coding tree is used for both Luma and Chroma. Therefore, the ALF signaling is moved to the Luma CU data.

In another variant, for ALF partitioning, the coarser granularity between Luma and Chroma is used. In this variant, the signaling is moved at the end of the CTU, where both Luma and Chroma coding trees have been encoded or decoded. For the current CTU, the Luma (resp. Chroma) coding tree is traversed, if a leaf node of the coding tree is reached, or if Chroma (resp. Luma) is not further split, then the current partition is used to signal ALF control. Otherwise, the coding tree is further split until a leaf node is reached.

In another embodiment, coding tree of the CTU is used for designing the ALF partitionning of the CTU until a certain point of the CTU coding tree.

In this embodiment, an ALF control depth is defined to use the coding tree of the CTU until an appropriate granularity is reached. Indeed, coding ALF parameters at lowest level partitioning may increase the amount of signaling significantly and may jeopardize the benefit of ALF.

For example, only QT is used, meaning BT or TT have no effect for ALF partitioning. ALF control is signaled after the QT split flag if it is false, i.e. when QT split is stopped.

In a variant, a minimum size (block width or height or both) to allow splitting is defined and signaled together with other high-level ALF signaling (in Picture Header, or PPS, SPS). ALF split is stopped when the current block size is smaller than the ALF minimum splitting size.

ALF control is signaled after split signaling if ALF split is stopped, or if a leaf node in the CTU partitioning is reached (CU).

In another variant, a maximum split depth is signaled for ALF partitioning. If this maximum split depth is reached, then the ALF partitioning stops splitting.

In these two last variants, ALF control is signaled interlaced with the coding tree signaling of the CTU.

Regardless the partitioning used to obtain ALF block, ALF control is signaled per ALF block. The position in the bitstream depends on the ALF partitioning as discussed above.

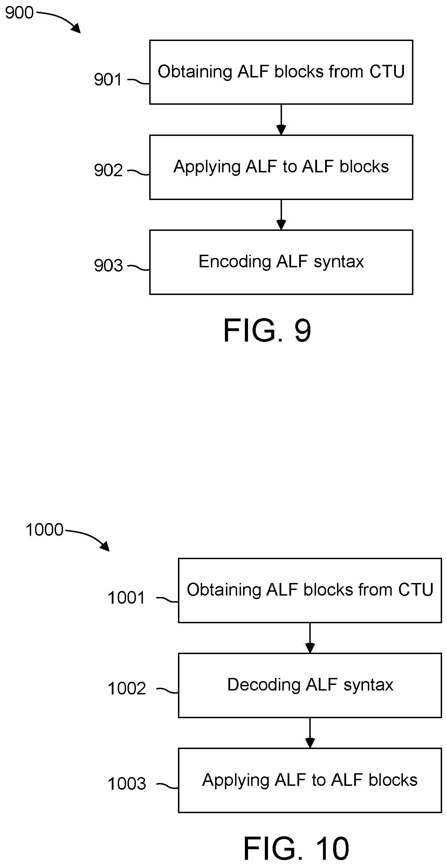

FIG. 9 illustrates an example of a method 900 for encoding a video according to an embodiment wherein ALF control is signaled at a level finer than the CTU. At 901, at least one ALF block is obtained from a splitting or partitioning of a larger block, e.g. a CTU of an image of the video. The larger block or CTU is for example obtained from a partitionning of the image for encoding the image. The partitioning of the CTU to obtain the ALF blocks can be done using any one of the variants described above. At 902, the CTU is processed by adaptive loop filtering module. ALF is applied to the CTU per ALF block. Each ALF block of the CTU is filtered using an adaptive loop filter set that is selected for the ALF block among a plurality of adaptive loop filter sets. That is, the adaptive loop filter set can change on ALF block basis. At 903, one or more syntax elements is encoded for the ALF blocks, wherein at least one syntax element provides for indicating a filter set index selecting the adaptive loop filter set among the plurality of adaptive loop filter sets for a current ALF block.

FIG. 10 illustrates an example of a method 1000 for decoding a video according to an embodiment wherein ALF control is signaled at a level finer than the CTU. At 1001, at least one ALF block is obtained from a splitting or partitioning of a larger block, e.g. a CTU of an image of the video. The larger block or CTU is for example obtained from a partitionning of the image for decoding the image. The partitioning of the CTU to obtain the ALF blocks can be done using any one of the variants described above, however the same partitioning is used between the encoder and the decoder. ALF is applied to the CTU per ALF block. Therefore, at 1002, one or more syntax elements is decoded for each one of the ALF blocks, wherein at least one syntax element provides for indicating a filter set index selecting the adaptive loop filter set among the plurality of adaptive loop filter sets for a current ALF block. A filter set index is then obtained for a current ALF block from the decoded syntax elements. At 1003, the CTU is processed by adaptive loop filtering module. A current ALF block is filtered using the adaptive loop filter set that is selected among the plurality of adaptive loop filter sets using the filter set index obtained at 1002 for the current ALF block.

In some variants, some syntax elements for ALF can be signaled in high level syntax, such as in a picture header or SPS, or PPS, or APS. The syntax elements can comprise for example at least one of an ALF control depth indicating a depth of the CTU partitioning at which ALF control is signaled, a minimum size for ALF blocks, or a maximum split depth for ALF. These syntax elements allow to define the depth at which ALF blocks are obtained and the partitioning of the CTU into ALF blocks. Transmitting these syntax elements in the bitstream allow to adapt the ALF partitioning according to the content of the video and/or the resolution of the video.

In a variant, the filter set index is signaled in a raw mode, that is the at least one syntax element providing for indicating the filter set index is the filter set index. The index can be signaled with truncated binary, or unary coding for example.

In another variant, the filter set index is signaled in a merge mode, that is ALF signaling is derived from a candidate block. This ALF signaling can comprise the filter set index and/or an ALF switch.

For example, the candidate block is a neighboring block of the current ALF block. In other example, the candidate block can be a block of the image or a reference image of the image derived using one or more coding parameters used for the encoding or decoding the samples of the current ALF block. For example, the candidate block can be a spatial neighbor or a temporal neighbor from a reference. In some examples, the candidate block can be obtained using one of an intra prediction direction mode, a motion vector, a candidate in a candidate list used for reconstructing the samples of the current ALF block.

In some variants, the candidate block is selected in a set of candidate blocks. For example, the set of candidate blocks that comprises at least one of the candidate blocks mentionned above. In these variants, the at least one syntax element comprises an indication of the selected candidate block in the set of candidate blocks.

In a variant, the at least one syntax element providing for indicating the filter set index comprises a flag indicating whether or not the filter set index is derived from a candidate block. In another variant, when ALF is disabled for the candidate block of a current ALF block, ALF is also disabled for the current ALF block.

Further variants for ALF signaling at the ALF block level are described in the following. The one or more syntax elements signaled to control ALF filters comprise at least one:

an ALF switch *ALF_enable* that signals whether ALF filter is enabled or not for a current ALF block
if ALF is enabled for the current ALF block, the filter set identifier: an index *ALF_idx*. Instead of a single index, it can be multiple indexes. For example, as in the current ECM, *alf_luma_fixed_filter_idx* or *alf_luma_prev_filter_idx* and *alf_ctb_filter_alt_idx* can be signaled.
any other parameters signaled in the current ECM that would be useful for the ALF filtering process.

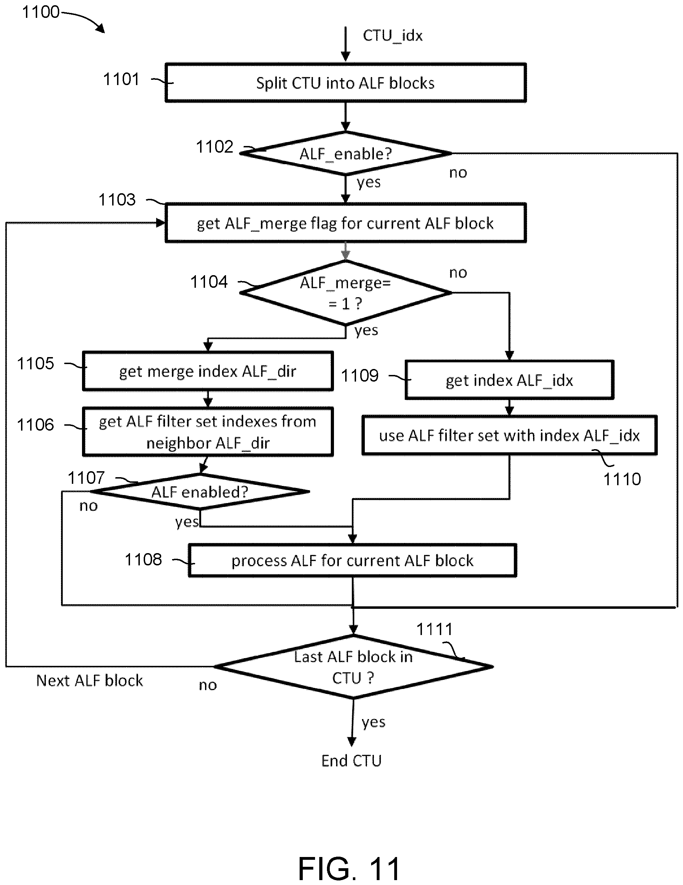

FIG. 11 illustrates an example of a method 1100 for signaling/decoding ALF syntax at block level according to an embodiment wherein ALF syntax is signaled using a merge mode. This embodiment can be used in the method for encoding or decoding a video mentionned above.

In this embodimet, the index can be derived from a neighbor block position. From the current ALF block, a list of available neighbor positions is defined. For example, the list comprises at least one of a left block, a bottom-left block, a top-left block, a top block, or a top-right block. For a current CTU (CTU_idx), at 1101, the CTU is split into ALF blocks (using any one of the partionning discussed above) and ALF blocks of the CTU are processed as follows. At 1102, it is checked whether ALF is enabled for the ALF block. For example, this can be done by decoding an ALF switch flag at the ALF block.. If ALF is not enabled for the ALF block, the process ends for the current ALF block and goes to 1111. Otherwise, the current ALF block is processed as follows. At 1103, a merge flag *ALF_merge* is decoded for a current ALF block indicating whether or not ALF filter set index is signaled in merge mode or not. If the merge flag *ALF merge* is true, then the ALF filter set index is the same as a neighbor one. At 1105, a direction index *ALF_dir* is signaled/decoded. For example, a single bit can be used when only left and top neighbor block positions are used. For example, if the direction index *ALF_dir* is "0", the ALF filter set index from the left block is used, otherwise the ALF filter set index from the top block is used. When more than 2 neighbors or candidates blocks are available, the direction index *ALF_dir* can be encoded/decoded using more than 1 bit. The direction index *ALF_dir* indicates a candidate block among a set of candidate blocks from which the ALF filter set index is derived.

In a variant, when there is only one candidate block available, the direction index *ALF_dir* is not signaled.

At 1106, the ALF filter set index for the current ALF block is obtained from the candidate block indicated by the direction index *ALF_dir.* In a variant, at 1107, it is checked whether or not ALF is enabled for the candidate block indicated by the direction index *ALF_dir.* For example, this can be determined by considering whether ALF is enabled for the CTU to which the candidate block belongs, or whether ALF has been activated or enabled for the candidate block.

If ALF is disabled for the candidate block then ALF is also disabled for the current ALF block. Otherwise, at 1108, the current ALF block is processed with adaptive loop filtering using the ALF filter set index obtained at 1106.

If at 1104 it is determined that *ALF merge* flag is false, then at 1109, the ALF filter set index *ALF_idx* is signaled/decoded. At 1110, the filter set to use for the ALF block is then the one having the index *ALF_idx.* Then, the process goes to 1108 to process the current ALF block with adaptive loop filtering using the ALF filter set obtained at 1110.

In a variant, the merge flag *ALF merge* is inferred to true and not signaled if the position of the current ALF block is not at a picture/subpicture/slice boundary. i.e., top and left neighbors are available for the current ALF block. This variant can be used in combination with the embodiments below.

Once the current ALF block has been processed with ALF, at 1111 it is checked if all ALF blocks of the CTU have been processed. If yes, the process of the current CTU ends, otherwise the next ALF block is considered at 1103.

In the variant described with FIG. 11, an ALF switch flag is signaled per ALF block (1102). In other variant, an ALF switch flag can also be signaled/decoded at the CTU level, in addition to the ALF switch flag of the AFLblocks or in replacement of the ALF switch flag of the ALF blocks. The ALF switch flag at the CTU level indicates for all ALF blocks of the CTU whether or not the ALF is enabled or not.

In a variant, when used in addition with the ALF switch flag at the ALF block level, the ALF switch flag at the CTU level allows to enable ALF at the CTU while still allowing to disable ALF for some ALF blocks only of the CTU using the ALF switch flag at the ALF block level. In another variant, when used in replacement of the ALF switch flag at the ALF block level, the ALF switch flag at the CTU level allows to enable ALF at the CTU while still allowing to disable ALF for some ALF blocks of the CTU using a merge candidate block for which ALF is disabled.

In another embodiment, a CABAC context determined based on neighbor blocks is used for signaling a merge flag *ALF merge.*

In this embodiment, the merge flag *ALF_merge* as described in the previous embodiment is signaled/decoded and 2 separated contexts are used to encode/decode this merge flag using CABAC: one context (*context0*) is used if the current position is not at a picture/subpicture/slice boundary. i.e., top and left neighbor blocks are available for the current ALF block, or another context (*context1*) is used otherwise.

This embodiment can be used in combination with other embodiments described herein.

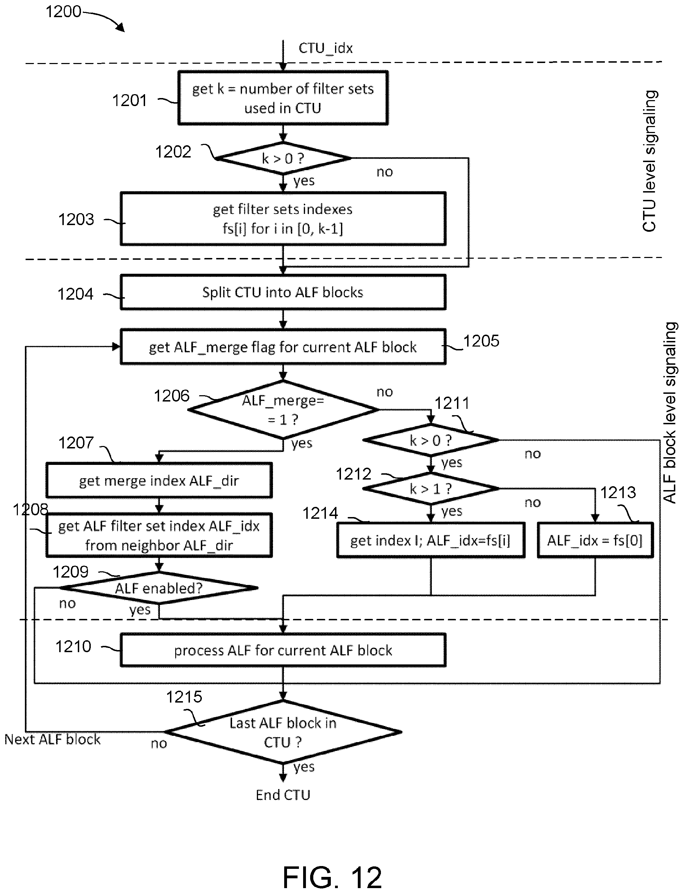

FIG. 12 illustrates an example of a method 1200 for signaling ALF syntax at block level according to another embodiment. In this embodiment, two-level ALF control signaling is used: CTU level and ALF block level. This embodiment can be used in the method for encoding or decoding a video mentionned above.

In VVC or ECM, an ALF switch flag is signaled per CTU, and if true followed by the ALF filter set index. In the embodiment described herein a number "k" of filter set is first signaled per CTU, followed by the k indexes (fs[0]... fs[k-1]) of the filter sets used in the CTU.

In a variant, the ALF switch flag can be replaced by the value of k: k=0 is equivalent to an ALF switch flag to false, (i.e.k=0 disables ALF for the ALF blocks). k>=1 indicates that ALF is enabled for the CTU.

In another variant, k=0 indicates that ALF index is signaled per ALF blocks and enabling or disabling the ALF at the ALF block level is provided by the merge flag signaled/decoded at ALF block level.

k=1 is equivalent to one filter set index per CTU. When k> 1, more than one ALF filter set can be used for ALF blocks in the CTU.

At 1201, for the current CTU, the number k of filter sets used in the CTU is signaled/decoded. At 1202, it is determined whether k is zero or not.

In the variant, where the ALF switch flag for the CTU is replaced by the value of k, if k=0, then ALF is disabled for the CTU and the process ends for the CTU. Otherwise (k>0), the process goes to 1203.

In the other variant, if at 1202 it is determined that k is zero, then the process goes to 1204 to split the CTU into ALF blocks for signaling/decoding ALF control at ALF blocks. If k is different from zero (k>0), then at 1203, the filter set indexes (fs[i] for i in [0, k-1]) of the filter sets used by ALF block in the CTU are signaled/decoded.

At 1204, the CTU is split into ALF blocks (using any one of the partionning discussed above) and ALF blocks are processed as follows. At 1205, a merge flag *ALF_merge* is signaled/decoded for a current ALF block indicating whether or not ALF filter set index is signaled in merge mode or not. If the merge flag *ALF merge* is true, at 1207, a merge index *ALF_dir* is signaled/decoded for the current ALF block. At 1208, the ALF filter set for the current ALF block is obtained uisng the ALF filter set index obtained from the candidate block indicated by the merge index *ALF_dir*. In a variant, at 1209, it is checked whether or not ALF is enabled for the candidate block indicated by the merge index *ALF_dir*. For example, this can be determined by considering whether ALF is enabled for the CTU to which the candidate block belongs. For example, it is checked whether k signaled /decoded for the CTU to which the candidate block belongs is 0 or not.

If ALF is disabled for the candidate block then ALF is also disabled for the current ALF block. Otherwise, at 1210, the current ALF block is processed with adaptive loop filtering using the ALF filter set obtained at 1208.

If at 1206 it is determined that *ALF_merge* flag is false, then at 1211, the value of k is checked, and it is determined whether k is zero or not. If k is zero, then ALF is disabled for the current ALF block. Otherwise, at 1212, it is determined whether k is one or not (k>1). If k equals one, then at 1213, the filter set index *ALF_idx* is set to the filter set fs[0] signaled for the CTU and the corresponding filter set is obtained for the current ALF block. If k>1, then at 1214, the ALF block level filter set index is signaled/decoded for the ALF block and the corresponding ALF filter set is obtained. Then at 1210, the ALF block is processed with the ALF filter set obtained at 1214 or 1213.

In another variant (case without 1212), at 1214, the ALF block level filter set index is signaled/decoded for the ALF block. In this variant, a specific value, for example 0, indicates that ALF is disabled for the ALF block. In this variant, at 1214, it is also determined whether ALF is enabled or not for the ALF block. This is done by checking whether the signaled/decoded ALF block level filter set index equals the specific value or not. If this is not the case, then at 1210, the ALF block is processed with the ALF filter set obtained at 1214, other wise the process goes to 1215. In this variant, determining at 1209 whether ALF is enabled or not for the candidate block can then be done by considering whether the ALF block level filter set index used for the candidate block equals to the specific value or not.

Once the current ALF block has been processed with ALF, at 1215 it is checked if all ALF blocks in the CTU have been processed. If yes, the process of the current CTU ends, otherwise the next ALF block is considered at 1205.

Note that an ALF switch flag to false (ALF switch flag coded at the CTU, or a value of k being 0) does not necessarily deactivate ALF for the blocks of the entire CTU: only some ALF blocks can have ALF deactivated, for other blocks, ALF merge flags can be used to propagate the ALF filtering across CTU boundaries. The ALF switch flag can be a mean to avoid coding an ALF index if all blocks are merged.

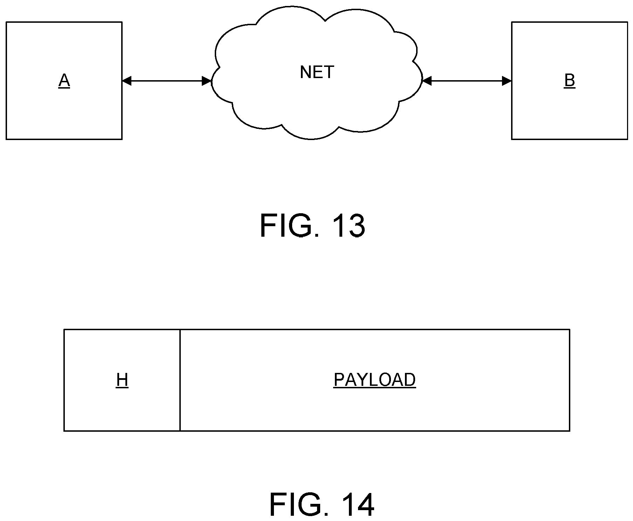

In an embodiment, illustrated in FIG. 13, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 14 shows an example of the syntax of a signal transmitted over a packet-based transmission protocol. Each transmitted packet P comprises a header H and a payload PAYLOAD. In some embodiments, the payload PAYLOAD may comprise data representative of the video encoded according to any one of the embodiments described above. The payload can also comprise any signaling as described above. For example, the signal comprises at least one of: an ALF control depth indicating a depth of the CTU partitioning at which ALF control is signaled, a minimum size for ALF blocks, or a maximum split depth for ALF partitionning, a merge flag *ALF merge* indicating whether or not ALF filter set index is signaled in merge mode or not for an ALF block, a merge index indicating for an ALF block a candidate block among a plurality of candidate blocks, an ALF index indicating for an ALF block a filter set among a plurality of filter sets, a number of filter sets used in a CTU, or filter set indexes of filter sets used in the CTU.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated to a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

**Claims**

1. A method comprising:

    obtaining at least one first block from a splitting of a second block of an image of a video, the second block being obtained from a partitionning of the image for decoding the image,
    decoding, at the first block level, at least one syntax element providing for indicating a filter set index selecting an adaptive loop filter set among a plurality of adaptive loop filter sets for the at least one first block,
    filtering the at least one first block using the selected adaptive loop filter set.

2. An apparatus comprising one or more processors operable to

    obtain at least one first block from a splitting of a second block of an image of a video, the second block being obtained from a partitionning of the image for decoding the image,

decode, at the first block level, at least one syntax element providing for indicating a filter set index selecting an adaptive loop filter set among a plurality of adaptive loop filter sets for the at least one first block,
filter the at least one first block using the selected adaptive loop filter set.

3. The method of claim 1, wherein the filter set index is derived from a candidate block.

4. The method of any one of claims 1 or 3, wherein the at least one syntax element providing for indicating the filter set index comprises a flag indicating whether or not the filter set index is derived from a candidate block.

5. The method of claim 4, wherein the candidate block is a block neighboring the at least one first block in the image.

6. The method of any one of claims 3-5, wherein the at least one syntax element providing for indicating the filter set index comprises an indication of the candidate block among a set of candidate blocks.

7. The method of claim 4, wherein responsive to a determination that the flag indicates that the filter set index is derived from a candidate block, the method comprises decoding an indication of the candidate block among a set of candidate blocks.

8. The method of claim 7, wherein responsive to a determination that the flag indicates that the filter set index is not derived from a candidate block, the method comprises decoding the filter set index.

9. The method of claim 3, wherein responsive to a determination that adaptive loop filtering is disabled for the candidate block, adaptive loop filtering is disabled for the at least one first block.

10. The method of claim 1, wherein a context used for entropy decoding the at least one syntax element providing for indicating the filter set index depends on an availability of neighboring blocks of the at least one first block.

11. The method of claim 1, further comprising decoding, at the second block level, one or more syntax elements controlling adaptive loop filtering applied to first blocks inside the second block.

12. The method of claim 11, wherein the one or more syntax elements comprise a number of filter sets used for filtering the first blocks inside the block.

13. The method of claim 12, wherein responsive to a determination that the number of filter sets is not zero, the one or more syntax elements comprise indexes of the filter sets used for filtering the first blocks inside the block.

14. The method of claim 12, wherein for the at least one first block, the at least one syntax element providing for indicating the filter set index indicating that the filter set index is not derived from a candidate block, and responsive to a determination the number of filter sets is zero, the at least one first block is not filtered.

15. The method of claim 12, wherein for the at least one first block, the at least one syntax element providing for indicating the filter set index indicating that the filter set index is not derived from a candidate block, and responsive to a determination the number of filter sets is higher than 1, the method comprises decoding an indication for determining the filter set index for the at least one first block.

16. The method of any one of claims 1, or 3-15, wherein the splitting of the second block providing the at least one first block follows a same partititioning of the second block for decoding the second block until at least one of the following occurs: a quad-tree split flag to false is decoded, a given depth is reached or a minimum block size is reached.

FIG. 1A

FIG. 1B

100C

105 — RF / COMP / USB / HDMI

110 — Processor

115

120 — Memory

130 — Encoder/Decoder

140 — Storage Device

150 — Communication Interface

160 — Display Interface

170 — Audio Interface

180 — Peripheral Interface

165 — Display

175 — Audio

185 — Peripherals

190 — Communication Channel

FIG. 1C

FIG. 2

FIG. 3

FIG. 4

FIG. 5

FIG. 6

Spatial Taps

Fixed Filter Output based Taps

RecBeforeDB based Taps

Residual based Taps

FIG. 7

NO_SPLIT

QT_SPLIT

BT_HOR

BT_VER

TT_HOR

TT_VER

FIG. 8

900 —

```
┌─────────────────────────────────────┐
901 ─│   Obtaining ALF blocks from CTU    │
└─────────────────────────────────────┘
                    │
                    ▼
┌─────────────────────────────────────┐
902 ─│     Applying ALF to ALF blocks     │
└─────────────────────────────────────┘
                    │
                    ▼
┌─────────────────────────────────────┐
903 ─│         Encoding ALF syntax        │
└─────────────────────────────────────┘
```

# FIG. 9

1000 —

```
┌─────────────────────────────────────┐
1001 ─│   Obtaining ALF blocks from CTU    │
└─────────────────────────────────────┘
                     │
                     ▼
┌─────────────────────────────────────┐
1002 ─│         Decoding ALF syntax        │
└─────────────────────────────────────┘
                     │
                     ▼
┌─────────────────────────────────────┐
1003 ─│     Applying ALF to ALF blocks     │
└─────────────────────────────────────┘
```

# FIG. 10

1100

CTU_idx

1101 — Split CTU into ALF blocks

1102 — ALF_enable?
yes        no

1103 — get ALF_merge flag for current ALF block

1104 — ALF_merge= = 1 ?
no

yes

1105 — get merge index ALF_dir

1109 — get index ALF_idx

1106 — get ALF filter set indexes from neighbor ALF_dir

use ALF filter set with index ALF_idx
1110

1107 — ALF enabled?
no

yes

1108 — process ALF for current ALF block

1111
Last ALF block in CTU ?

Next ALF block        no

yes

End CTU

# FIG. 11

CTU_idx

1201 — get k = number of filter sets used in CTU

1202 — k > 0 ?
yes / no

1203 — get filter sets indexes fs[i] for i in [0, k-1]

CTU level signaling

1204 — Split CTU into ALF blocks

1205 — get ALF_merge flag for current ALF block

1206 — ALF_merge== 1 ?
no / yes

1211 — k > 0 ?
yes / no

1207 — get merge index ALF_dir

1212 — k > 1 ?
yes / no

1208 — get ALF filter set index ALF_idx from neighbor ALF_dir

1214 — get index I; ALF_idx=fs[i]

1213 — ALF_idx = fs[0]

1209 — ALF enabled?
no / yes

1210 — process ALF for current ALF block

ALF block level signaling

1215 — Last ALF block in CTU ?
Next ALF block / no / yes

End CTU

FIG. 12

FIG. 13

FIG. 14

| | Europäisches Patentamt European Patent Office Office européen des brevets | **EUROPEAN SEARCH REPORT** | **Application Number** EP 24 30 5507 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/182620 A1 (CANON KK [JP]; CANON EUROPE LTD [GB]) 17 September 2020 (2020-09-17) * page 1 - page 2 * * page 25 * * page 59 * * page 74 * * page 83 - page 84 * ----- | 1,2, 10-15 | INV. H04N19/82 H04N19/117 H04N19/176 H04N19/70 H04N19/96 |
| Y | HU (QUALCOMM) N ET AL: "CE2.3 and CE2.4: Fixed filters, temporal filters, CU-level control and low-latency encoder for ALF", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0391 25 September 2018 (2018-09-25), XP030193896, Retrieved from the Internet: URL:http://phenix.int-evry.fr/jvet/doc_end _user/documents/12_Macao/wg11/JVET-L0391-v 1.zip JVET-L0391-v1.docx [retrieved on 2018-09-25] * abstract * * Sections 2.1.3 and 2.1.4 * ----- | 1-9,11, 16 | |
| | -/-- | | **TECHNICAL FIELDS SEARCHED (IPC)** H04N |

The present search report has been drawn up for all claims

| Place of search | Date of completion of the search | Examiner |
|---|---|---|
| The Hague | 24 September 2024 | Molina Sedgwick, S |

Europäisches
Patentamt

European
Patent Office

Office européen
des brevets

# EUROPEAN SEARCH REPORT

**Application Number**

EP 24 30 5507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANLE CHEN ET AL: "Algorithm description for Versatile Video Coding and Test Model 2 (VTM 2)", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K1002_v2; JVET-K1002 2 October 2018 (2018-10-02), pages 1-21, XP030194252, Retrieved from the Internet: URL:http://phenix.int-evry.fr/jvet/doc_end _user/documents/11_Ljubljana/wg11/JVET-K10 02-v3.zip JVET-K1002-v2.docx [retrieved on 2018-10-02] * abstract * * Sections 3.2.1 and 3.2.2 * | 1-16 | |
| | ----- | | |
| Y | US 2013/329782 A1 (SEREGIN VADIM [US] ET AL) 12 December 2013 (2013-12-12) * paragraph [0314] * | 1-9,11, 16 | **TECHNICAL FIELDS SEARCHED (IPC)** |
| | ----- | | |
| Y | US 9 641 836 B2 (QUALCOMM INC [US]) 2 May 2017 (2017-05-02) * column 26, line 41 - line 51 * | 1-9,11, 16 | |
| | ----- | | |
| | -/-- | | |

The present search report has been drawn up for all claims

| Place of search | Date of completion of the search | Examiner |
|---|---|---|
| The Hague | 24 September 2024 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 2 of 3

# EUROPEAN SEARCH REPORT

**Application Number**

EP 24 30 5507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KARCZEWICZ (QUALCOMM) M ET AL: "CE2-related: CTU Based Adaptive Loop Filtering", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K0382 9 July 2018 (2018-07-09), XP030199148, Retrieved from the Internet: URL:http://phenix.int-evry.fr/jvet/doc_end _user/documents/11_Ljubljana/wg11/JVET-K03 82-v7.zip JVET-K0382-v2.docx [retrieved on 2018-07-09] * abstract * * Sections 1 and 2 * | 1-16 | |
| Y | US 2021/120261 A1 (LIM SUNG CHANG [KR] ET AL) 22 April 2021 (2021-04-22) * paragraph [0345] * | 3-9 | |

**TECHNICAL FIELDS SEARCHED (IPC)**

The present search report has been drawn up for all claims

| Place of search | Date of completion of the search | Examiner |
|---|---|---|
| The Hague | 24 September 2024 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                            

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 30 5507

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | | Publication date | Patent family member(s) | | Publication date |
|---|---|---|---|---|---|
| WO 2020182620 | A1 | 17-09-2020 | BR | 112021017682 A2 | 16-11-2021 |
| | | | CN | 113574898 A | 29-10-2021 |
| | | | CN | 117956147 A | 30-04-2024 |
| | | | CN | 117956148 A | 30-04-2024 |
| | | | CN | 117956149 A | 30-04-2024 |
| | | | CN | 118118666 A | 31-05-2024 |
| | | | CN | 118138755 A | 04-06-2024 |
| | | | EP | 3935860 A1 | 12-01-2022 |
| | | | JP | 7256874 B2 | 12-04-2023 |
| | | | JP | 7391170 B2 | 04-12-2023 |
| | | | JP | 2022522577 A | 20-04-2022 |
| | | | JP | 2023015248 A | 31-01-2023 |
| | | | KR | 20210135273 A | 12-11-2021 |
| | | | TW | 202034702 A | 16-09-2020 |
| | | | TW | 202325026 A | 16-06-2023 |
| | | | US | 2022159249 A1 | 19-05-2022 |
| | | | WO | 2020182620 A1 | 17-09-2020 |
| US 2013329782 | A1 | 12-12-2013 | CN | 104396243 A | 04-03-2015 |
| | | | EP | 2859722 A2 | 15-04-2015 |
| | | | US | 2013329782 A1 | 12-12-2013 |
| | | | WO | 2013184954 A2 | 12-12-2013 |
| US 9641836 | B2 | 02-05-2017 | CN | 104620577 A | 13-05-2015 |
| | | | EP | 2883347 A1 | 17-06-2015 |
| | | | US | 2014044178 A1 | 13-02-2014 |
| | | | WO | 2014025698 A1 | 13-02-2014 |
| US 2021120261 | A1 | 22-04-2021 | CN | 112088533 A | 15-12-2020 |
| | | | CN | 116866563 A | 10-10-2023 |
| | | | CN | 116866565 A | 10-10-2023 |
| | | | CN | 116866566 A | 10-10-2023 |
| | | | CN | 118381898 A | 23-07-2024 |
| | | | CN | 118381899 A | 23-07-2024 |
| | | | CN | 118381900 A | 23-07-2024 |
| | | | CN | 118381901 A | 23-07-2024 |
| | | | CN | 118381902 A | 23-07-2024 |
| | | | CN | 118381903 A | 23-07-2024 |
| | | | CN | 118381904 A | 23-07-2024 |
| | | | CN | 118381905 A | 23-07-2024 |
| | | | CN | 118381906 A | 23-07-2024 |
| | | | CN | 118381907 A | 23-07-2024 |
| | | | CN | 118381908 A | 23-07-2024 |
| | | | CN | 118381909 A | 23-07-2024 |
| | | | CN | 118381910 A | 23-07-2024 |
| | | | CN | 118381911 A | 23-07-2024 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 5507

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | Publication date | Patent family member(s) | Publication date |
|---|---|---|---|
| | | CN 118400521 A | 26-07-2024 |
| | | CN 118400522 A | 26-07-2024 |
| | | KR 20190110960 A | 01-10-2019 |
| | | KR 20230074680 A | 31-05-2023 |
| | | KR 20230150937 A | 31-10-2023 |
| | | KR 20230150938 A | 31-10-2023 |
| | | KR 20240035965 A | 19-03-2024 |
| | | KR 20240035966 A | 19-03-2024 |
| | | KR 20240035967 A | 19-03-2024 |
| | | KR 20240035968 A | 19-03-2024 |
| | | US 2021120261 A1 | 22-04-2021 |
| | | US 2023041717 A1 | 09-02-2023 |
| | | US 2023336766 A1 | 19-10-2023 |
| | | US 2023396791 A1 | 07-12-2023 |
| | | WO 2019182385 A1 | 26-09-2019 |

EPO FORM P0459

For more details about this annex : see Official Journal of the European Patent Office, No. 12/82

page 2 of 2